# EUROPÄISCHE PATENTSCHRIFT

(11) **EP 2 850 416 B1**
(45) Veröffentlichungstag und Bekanntmachung des Hinweises auf die Patenterteilung: **23.06.2021**
(21) Anmeldenummer: 13718119.4
(22) Anmeldetag: 13.04.2013
(51) Int. Cl.: G01N 21/90

(54) **VERFAHREN UND VORRICHTUNG ZUR INSPEKTION VON LEERFLASCHEN**
METHOD AND APPARATUS FOR INSPECTING EMPTY BOTTLES
PROCÉDÉ ET DISPOSITIF DE CONTRÔLE DE BOUTEILLES VIDES

(30) Priorität: 18.05.2012 DE 102012009783
(43) Veröffentlichungstag der Anmeldung: 25.03.2015
(73) Patentinhaber: KHS GmbH, 44143 Dortmund (DE)
(72) Erfinder: HERRMANN, Jürgen, 57520 Rosenheim (DE); SCHORN, Wolfgang, 53506 Hönningen (DE); HERRMANN, Marius Michael, 57520 Rosenheim (DE); ZHANG, Xiang, 58300 Wetter (DE)
(86) Internationale Anmeldenummer: PCT/EP2013/001092
(87) Internationale Veröffentlichungsnummer: WO 2013/170920

(56) Entgegenhaltungen:
- DE-A1- 3 611 536
- US-A- 5 729 340
- None

## Beschreibung

### Technisches Gebiet

Die vorliegende Erfindung betrifft ein Verfahren zur Inspektion mindestens einer Leerflasche unter Erkennung einer Position eines auf einer Oberfläche der Leerflasche angeordneten Merkmals. Ferner betrifft die Erfindung eine entsprechende Vorrichtung bzw. einen entsprechenden Leerflascheninspektor.

### Hintergrund der Erfindung

Eine Leerflasche soll im Rahmen der vorliegenden Beschreibung allgemein jegliche Art von Behälter umfassen, der mit Schüttgut befüllbar ist, jedoch bei durchzuführenden Inspektionen mit noch keinem Schüttgut gefüllt ist. Derartige Behälter können bspw. als Flaschen für Flüssigkeiten, bspw. für Getränke verwendet werden. Die Behälter, z. B. Flaschen können aus einem transparenten oder transluzenten Material, bspw. aus Glas oder aus einem transluzenten Kunststoff, wie bspw. PET bestehen. Denkbar ist aber auch, dass die Behälter aus anderen Materialien bestehen und mit anderen Füllgütern befüllbar sind. Bevor derartige Behälter befüllt werden und bevor sie eine Etikettiermaschine durchlaufen oder nachdem sie eine solche Etikettiermaschine durchlaufen haben, werden diese Behälter eingehend mit geeigneten Inspektionsvorrichtungen inspiziert. Beispielsweise ist vorgesehen, eine Fremdstoffinspektion durchzuführen, in welcher die Behälter auf unerwünschte Fremdstoffe in ihrem Inneren inspiziert werden.

Aus der DE 36 11 536 A1 ist ein Verfahren und eine Vorrichtung zum Überprüfen des Bodens einer durchsichtigen Flasche hinsichtlich Herstellungsfehler mittels zwei Kameras bekannt. Dabei werden Herstellungsfehler durch die erste Kamera erfasst und eine bodennahe Markierung und deren Winkellage durch die andere Kamera erkannt und der zugehörige Strahlengang wird über Strahlteiler der zweiten Kameras zugeführt. Eine am Behälterboden befindliche Kennzeichnung kann datentechnisch durch Maskierungen überdeckt werden, welche formatabhängig in einem zentralen Datenspeicher vorgehalten werden.

In der Regel weisen Behälter, wie bspw. Leerflaschen zur Kennzeichnung ihres Typs bzw. ihres aufzunehmenden Schüttguts an einer Oberfläche spezifische Merkmale, wie bspw. ein Embossing bzw. eine Prägung oder bestimmte Etiketten auf. Um gewährleisten zu können, dass bei Inspektionen der Behälter, insbesondere der Leerflaschen, diese auf der Oberfläche sich befindlichen Merkmale nicht als Fehler, d. h. als vermeintlich vorhandene Fremdkörper detektiert werden, ist es notwendig, hier eine geeignete Maßnahme zu treffen, um trotz vorhandener Etiketten oder Embossings eine sichere Inspektion der Leerflaschen im Hinblick auf tatsächliche Fehler oder vorhandene Schmutzpartikel durchführen zu können.

### Zusammenfassung der Erfindung

Vor diesem Hintergrund war es eine Aufgabe der vorliegenden Erfindung, ein Verfahren und eine entsprechende Vorrichtung zur Inspektion mindestens eines Behälters bzw. mindestens einer Leerflasche bereitzustellen, welches bzw. welche gewährleistet, dass die Inspektion zuverlässig und sicher durchgeführt werden kann, ohne eine übermäßige Anzahl von Fehldetektionen zu erhalten. Das bedeutet, dass es wünschenswert ist, eine Inspektion derartiger Leerflaschen effizient, aber mit einem minimalen Sicherheitsverlust bei bspw. einer Durchlichtkontrolle durchführen zu können.

Zur Lösung dieser Aufgabe wird dazu erfindungsgemäß ein Verfahren zur Inspektion mindestens einer Leerflasche mit den Merkmalen von Patentanspruch 1 sowie eine Vorrichtung zur Inspektion mindestens einer Leerflasche mit den Merkmalen von Patentanspruch 12 bereitgestellt.

Erfindungsgemäß wird ein Verfahren zur Inspektion mindestens einer Leerflasche unter Erkennung einer Position eines auf einer Oberfläche der Leerflasche angeordneten Merkmals bereitgestellt. Dabei durchläuft die Leerflasche vor der Inspektion ein Erkennungsmodul, in welchem eine vorgegebene Position des zu erkennenden Merkmals optisch und/oder sensorisch zur Erkennung einer tatsächlichen Position des Merkmals abgetastet und die tatsächliche Position ermittelt und bereitgestellt wird.

Ein solches Merkmal, wie ein Embossing, eine Ziernaht oder die Produktionsnaht, wird in der Regel mittels eines Auflichtverfahrens detektiert, welches aufgrund der geringeren Lichtintensität und/oder gezielten Reflektion an der Behälteroberfläche die Erkennung von konkreten Strukturen und/oder Formen zulässt.

Bei einer nachfolgenden ersten Inspektion wird sodann für die ermittelte Position des Merkmals eine Maske generiert, so dass bei Durchführung der ersten Inspektion im Bereich der Maske keine Fehlererkennung erfolgt. Diese Fehlerinspektion wird in der Regel als Durchlichtverfahren vorgenommen, um Stoffe, Fehler und Störungen in der Wandung oder im Inneren eines Behälters zu detektieren. Dabei wird, verglichen zur Auflichtinspektion, eine viel höhere LUX-Zahl respektive Beleuchtungsintensität gewählt, bei welcher das vorgenannten Merkmal, z.B. das Embossing, überblitzt werden würde, also nicht als diskrete Struktur bzw. in seiner genauen Lage und Ausdehnung erkannt werden könnte.

Nach Durchführung der ersten Inspektion wird die Leerflasche um einen vorgegebenen Winkel gedreht, wobei die Position des Merkmals mit dem durch die Drehung erzeugten Offset verrechnet und als neue Position zur Durchführung einer zweiten Inspektion bereitgestellt wird. Bei der zweiten Inspektion wird für die bereitgestellte neue Position des Merkmals eine zweite Maske generiert, so dass bei Durchführung der zweiten Inspektion im Bereich der zweiten Maske keine Fehlererkennung erfolgt, wobei bei einer ungenauen Drehung der Leerflasche das Merkmal nicht im Bereich der zweiten Maske ist und folglich als Fehler erkannt wird. Bei Fehlererkennung wird sodann die Leerflasche aus dem entsprechenden System ausgeleitet und ggf. näher überprüft bzw. einer nochmaligen Inspektion unterzogen.

In möglicher Ausgestaltung des erfindungsgemäßen Verfahrens wird der vorgegebene Winkel als Winkel von etwa 90° gewählt.

In weiterer Ausgestaltung des erfindungsgemäßen Verfahrens wird die vorgegebene Position des zu erkennenden Merkmals optisch und/oder sensorisch mit einer 360°-Abdeckung zur Erkennung der tatsächlichen Position des Merkmals abgetastet. Dazu wird in dem vorgesehenen Erkennungsmodul eine Anordnung von bspw. vier Kameras vorgesehen, die jeweils in einem Winkel von 90° zueinander stehen und somit die das Erkennungsmodul durchlaufende Leerflasche vollumfänglich abtasten können. Der Begriff Kamera soll hier nicht einschränkend sein. Vielmehr umfasst der Begriff Kamera alle geeigneten Bild- bzw. Inspektionsaufnahmeeinrichtungen. Ferner werden im Erkennungsmodul zur Abtastung der Leerflasche durch die vorgesehenen Kameras Beleuchtungseinheiten vorgesehen, deren Anordnung und Typ vorzugsweise je nach Typ des Merkmals auszuwählen sind.

Der Begriff Position umfasst im Rahmen der vorliegenden Beschreibung eine Winkelposition sowie eine Höhenposition des Merkmals in Bezug auf das von der Leerflasche durchlaufene System. Der Durchlauf der Leerflasche durch das Erkennungsmodul und fortführend durch das System zur Inspektion wird in der Regel durch sogenannte Bandförderer bzw. bandartige Transporteure bewirkt. Nach Durchlauf des Erkennungsmoduls wird die zu inspizierende Leerflasche einem Einlauf eines Leerflascheninspektors zur Seitenwandinspektion zugeführt. Im Leerflascheninspektor wird sodann für die ermittelte Position des Merkmals eine Maske im betreffenden Inspektionsbereich der jeweiligen Seitenwandinspektion erstellt, so dass im Bereich der Maske keine Fehlererkennung bspw. auf Verschmutzung durchgeführt wird. Nach Durchführung der Seitenwandinspektion im Einlauf des Leerflascheninspektors wird die Leerflasche im Durchlauf durch einen Gurtbandantrieb um möglichst, wie bereits erwähnt, genau 90° gedreht. Die Position des Merkmals wird dann durch einen durch die Drehung erzeugten Offset verrechnet und als neue Position des Merkmals an die Seitenwandinspektion in einem Auslauf des Leerlaufinspektors als Eingabewert übermittelt. Anhand dieser übermittelten neuen Position wird wiederum eine Maske generiert, so dass auch im Auslauf bei der Seitenwandinspektion im Bereich der Maske keine Fehlererkennung vorgenommen wird. Ist allerdings die Drehung der Flasche nicht genau genug erfolgt, so wird trotz Maskierung das Merkmal nicht im Bereich der Maske sein und demnach als Seitenwandfehler erkannt.

Wie bereits erwähnt, entspricht in einer Ausführungsform des erfindungsgemäßen Verfahrens die erste Inspektion einer Seitenwandinspektion in einem Einlauf eines Leerflascheninspektors und die zweite Inspektion einer Seitenwandinspektion in einem Auslauf eines Leerflascheninspektors. Ebenso ist es denkbar, wie bereits erwähnt, dass die Drehung der Leerflasche bei Durchlauf der Leerflasche durch einen Gurtbandantrieb eines Leerflascheninspektors vorgenommen wird.

In weiterer Ausgestaltung des erfindungsgemäßen Verfahrens durchläuft nach Drehung der Leerflasche um einen vorgegebenen Winkel, wie bspw. von 90°, die Flasche vor der zweiten Inspektion ein zweites Erkennungsmodul, in welchem die neue Position des zu erkennenden Merkmals optisch und/oder sensorisch vorzugsweise mit einer 360°-Abdeckung zur Erkennung der tatsächlichen neuen Position des Merkmals abgetastet und die tatsächlich neue Position ermittelt und bereitgestellt wird.

Sodann wird bei der nachfolgenden zweiten Inspektion für die ermittelte tatsächliche neue Position des Merkmals eine Maske generiert, so dass bei Durchführung der zweiten Inspektion im Bereich der Maske keine Fehlererkennung erfolgt. Dadurch wird gewährleistet, dass eine Fehlererkennung aufgrund einer fehlerhaften Maskierung des Merkmals basierend auf einer fehlerhaften Drehung vermieden wird, da nach Drehung eine nochmalige Erkennung der tatsächlich neuen Position durchgeführt wird. Sollte die Flasche fehlerhaft gedreht worden sein, so kann dieser Fehler quasi durch das zweite Erkennungsmodul bzw. die darin durchgeführte Erkennung der tatsächlichen neuen Position ausgeglichen werden. Dadurch werden keine, aber zumindest weniger Flaschen ausgeleitet, die zwar keine Verschmutzung aufweisen, jedoch aufgrund einer fehlerhaften Maskierung des Merkmals bei der zweiten Inspektion als fehlerhaft detektiert werden. Durch diese Ausführungsform des erfindungsgemäßen Verfahrens kann die Sicherheit bei einer Durchlichtkontrolle einer Leerflasche nochmals erhöht werden.

In einer weiteren Ausführungsform des erfindungsgemäßen Verfahrens werden die ermittelte tatsächliche Position vor der ersten Inspektion und die ermittelte tatsächliche neue Position vor der zweiten Inspektion miteinander verrechnet und daraus ein tatsächlicher Drehwinkel bestimmt. Dadurch kann die Drehung bzw. die die Drehung durchführende Einheit kontrolliert und wieder entsprechend justiert werden. Sollte dies nicht möglich sein, so wird auf alle Fälle aufgrund dieser fehlerhaften Drehung keine Flasche fälschlicherweise ausgeleitet.

In einer weiteren Ausführungsform des erfindungsgemäßen Verfahrens wird der bestimmte tatsächliche Drehwinkel zu einer Drehwinkelüberwachung verwendet und mit dem vorgegebenen Winkel und dessen Toleranzen verglichen, wobei eine Abweichung außerhalb der Toleranzen als Fehler erkannt wird, aufgrund dessen die die Drehung durchzuführende Einheit auszutauschen oder zumindest neu zu adjustieren ist.

Gemäß einer weiteren Ausführungsform des erfindungsgemäßen Verfahrens werden in dem Erkennungsmodul verschiedene Beleuchtungseinheiten vorgesehen, die je nach Typ des zu erkennenden Merkmals auszuwählen sind.

Die vorliegende Erfindung betrifft ferner eine Vorrichtung zur Fehlerinspektion (nachfolgend auf nur Inspektion genannt) mindestens einer Leerflasche unter Erkennung einer Position eines auf einer Oberfläche der Leerflasche angeordneten Merkmals. Die erfindungsgemäße Vorrichtung umfasst mindestens ein Erkennungsmodul, das dazu ausgelegt ist, eine vorgegebene Position eines zu erkennenden Merkmals optisch und/oder sensorisch zur Erkennung einer tatsächlichen Position des Merkmals abzutasten und die tatsächliche Position zu ermitteln und bereitzustellen. Ferner umfasst die erfindungsgemäße Vorrichtung eine erste Inspektionseinheit, welche dazu ausgerichtet ist, anhand einer ermittelten Position des Merkmals eine Maske zu generieren und ferner eine Inspektion durchzuführen, wobei im Bereich der Maske bei Durchführung der Inspektion keine Fehlererkennung erfolgt.

Dabei soll hierunter verstanden werden, dass die Datenverarbeitung der Bestimmung von Merkmalsausdehnung und -position, sowie der dynamischen Maskenanpassung, auch in einem oder mehreren Steuer- und Rechnereinheiten erfolgen kann, die nicht unbedingt Teil der Inspektionseinheit sein müssen.

Ferner umfasst die vorliegende erfindungsgemäße Vorrichtung ein Drehmodul, das dazu ausgelegt ist, die Leerflasche nach einer ersten Inspektion um einen vorgegebenen Winkel zu drehen und die Position des Merkmals mit einem durch die Drehung erzeugten Offset zu verrechnen und als neue Position zur Durchführung einer zweiten Inspektion bereitzustellen, wobei im Bereich der zweiten Maske in analoger Weise keine Fehlererkennung erfolgt Diese Vorrichtung steht in bekannter Weise funktional in Verbindung mit einem Ausleitmodul, welches verschmutzte oder beschädigte Behälter aus dem Strom ausleitet.

Eine Ausführungsform der erfindungsgemäßen Vorrichtung umfasst ferner ein oder mehrere weitere Erkennungsmodule, welches nach der ersten Inspektionseinheit und nach dem Drehmodul angeordnet ist und dazu ausgelegt ist, die neue Position des zu erkennenden Merkmals optisch und/oder sensorisch zur Erkennung der tatsächlichen neuen Position des Merkmals abzutasten, um die tatsächliche neue Position zu ermitteln und an die zweite Inspektionseinheit zu übergeben, so dass bei einer nachfolgenden zweiten Inspektion für die ermittelte tatsächliche neue Position des Merkmals seitens der zweiten Inspektionseinheit eine Maske generiert wird, so dass bei Durchführung der zweiten Inspektion im Bereich der Maske keine Fehlererkennung erfolgt.

Die flächige oder räumliche Ausdehnung eines Merkmals ist von dem Dreh- und Transportvorgang des Behälters abhängig, da nur die Schattenfläche des Merkmals relativ zur Inspektionskamera relevant ist. Damit kann auch der diskrete Anteil eines Merkmals bestimmt und nachfolgend mittels Maskierung ausgeschlossen werden, der sich auf der Rückseite des Behälters befindet, aber bei einer Durchlichtinspektion dennoch als Fehler erkannt werden würde. Als Rückseite ist dabei die Behälteroberfläche bzw. -seite zu verstehen, die von der Kamera bzw. dem Sensorelement abgewandt liegt.

Daher wird mittels der Steuer- und Rechnereinheit die Daten über die flächige und/oder räumliche Ausdehnung des oder der mehreren Merkmale generiert und weitergeleitet, zur dynamischen Anpassung der Lage sowie der flächigen und/oder räumlichen Ausdehnung der jeweiligen Masken.

So wird mittels der Steuer- und Rechnereinheit sichergestellt, dass immer nur ein möglichst keiner Bereich des Behälters von der Inspektion ausgenommen wird.

Die Maske wird dabei idealerweise so dimensioniert, dass diese der Fläche der Markierung entspricht oder die Markierung nur um eine Fläche überragt, die der Auflösung der Sensoren, insb. einer Kameras entspricht.

Sowohl in dem ersten wie in dem zweiten Erkennungsmodul können verschiedene Beleuchtungseinheiten vorgesehen sein, die je nach Typ des zu erkennenden Merkmals auszuwählen sind. Ferner ist es denkbar, dass sowohl im ersten als auch im zweiten Erkennungsmodul jeweils vier Kameras in einem Winkelabstand von 90° zueinander angeordnet sind, so dass eine 360°-Abdeckung bei Abtastung der Leerflasche realisiert werden kann. Wie bereits eingangs erwähnt, soll der Begriff Kamera hier nicht beschränkend sein, sondern vielmehr alle geeigneten Bild- bzw. Inspektionsaufnahmeeinrichtungen umfassen. Sowohl die erste wie auch die zweite Inspektionseinheit umfassen jeweils ebenfalls entsprechende Beleuchtungen und Bildaufnahmegeräte bzw. Sensorsysteme, um jeweils eine geeignete Inspektion, insbesondere eine Seitenwandinspektion der sie durchlaufenden Leerflaschen durchführen zu können. Zwischen den zwei Inspektionseinheiten ist in der Regel ein Gurtbandantrieb zur Flaschendrehung vorgesehen, welcher auf dem Weg von der ersten Inspektionseinheit zur zweiten Inspektionseinheit von der entsprechenden Flasche durchlaufen wird, wobei natürlich aus andere Systeme bekannt sind, zum Beispiel die Fixierung und Drehung eines Behälters an der Mündung.

Die erfindungsgemäße Vorrichtung ist insbesondere dazu geeignet, ein erfindungsgemäßes Verfahren, wie voranstehend beschrieben, auszuführen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Zeichnung

Figur 1 zeigt in schematischer Darstellung eine Draufsicht auf eine erste Ausführungsform einer erfindungsgemäßen Vorrichtung zur Inspektion mindestens einer Leerflasche.
Figur 2 zeigt in schematischer Darstellung eine Draufsicht auf eine Ausführungsform eines Erkennungsmoduls, wie es in der in Figur 1 dargestellten Ausführungsform der erfindungsgemäßen Vorrichtung vorgesehen ist.
Figur 3 zeigt beispielhaft in schematischer Darstellung eine Leerflasche mit einer in Bezug auf ein Merkmal richtig positionierten Maske.
Figur 4 zeigt demgegenüber schematisch eine Leerflasche mit einer auf einem Merkmal nicht richtig positionierten Maske.
Figur 5 zeigt in schematischer Darstellung eine Draufsicht auf eine zweite Ausführungsform einer erfindungsgemäßen Vorrichtung mit einem ersten und einem zweiten Erkennungsmodul.

### Detaillierte Beschreibung der Zeichnung

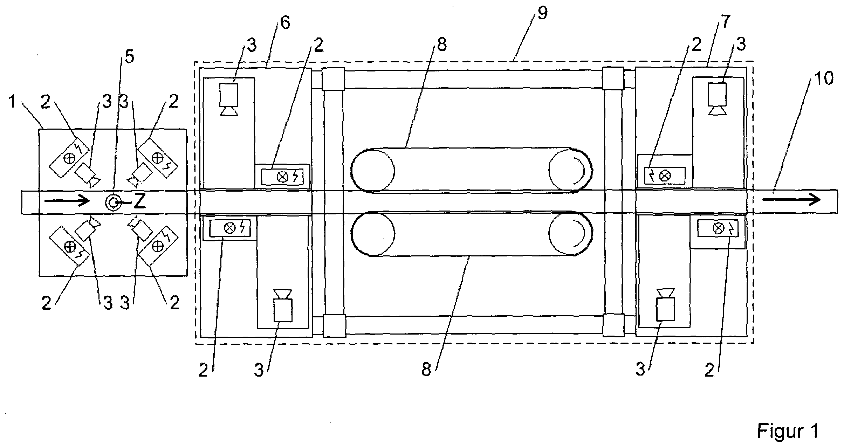

Figur 1 zeigt eine Draufsicht auf eine erfindungsgemäße Vorrichtung zur Inspektion mindestens einer Leerflasche unter Erkennung einer Position eines auf einer Oberfläche der Leerflasche angeordneten Merkmals. Die hier dargestellte Vorrichtung umfasst ein erstes Erkennungsmodul 1, gefolgt von einem Leerflascheninspektor 9. Eine zu inspizierende Leerflasche durchläuft in Laufrichtung 10 zunächst das erste Erkennungsmodul 1 und sodann den Leerflascheninspektor 9. Das erste Erkennungsmodul 1 umfasst in der hier dargestellten Form vier Beleuchtungseinheiten 2 sowie vier Bildaufnahmeeinheiten bzw. Sensorsysteme 3. Die Beleuchtungseinheiten 2 sind jeweils hinter den jeweiligen Bildaufnahmeeinheiten 3 angeordnet, so dass eine jeweilige Beleuchtungseinheit 2 und eine jeweilige Bildaufnahmeeinheit 3 auf einer Linie liegen und die jeweils sich daraus ergebenden vier Linien der vier Beleuchtungseinheiten 2 und der entsprechenden vier Bildgebungseinheiten 3 sich in einem Zentrum Z treffen. Die Beleuchtungseinheiten 2 untereinander sowie die Bildgebungseinheiten 3 untereinander sind hier in einem Winkel von 90° zueinander angeordnet. Befindet sich die mindestens eine Leerflasche 5 im Zentrum bzw. Schnittpunkt Z der erwähnten Linien, so kann diese sich hier befindende Flasche 5 durch die Beleuchtungseinheiten 2 und die Bildaufnahmeeinheiten 3 genau untersucht bzw. abgetastet werden, so dass eine tatsächliche Position des Merkmals erkannt und somit ermittelt und bereitgestellt werden kann. Die Erkennung der tatsächlichen Position des Merkmals erfolgt hier in einem vorgegebenen Bereich der Oberfläche der Leerflasche, in welchem das Merkmal definitionsgemäß angeordnet ist. In dieser besonderen Ausführungsform bedeutet dies, dass die Flasche nicht in ihrer gesamten Höhe von den Beleuchtungs- 2 und Bildaufnahmeeinheiten 3 abgetastet wird, sondern der Bereich, welcher abgetastet wird, bereits im Vorfeld auf eine vorgegebene Position des zu erkennenden Merkmals beschränkt ist.

Wird nunmehr die tatsächliche Position des Merkmals erkannt und somit ermittelt, so wird diese tatsächlich ermittelte Position an einen Einlauf 6 des nachfolgenden Leerflascheninspektors 9 weitergegeben. Die hierfür bekannte Steuer- und Rechnereinheit ist nicht dargestellt, kann aber als eine zentrale Steuer- und Rechnereinheit vorgesehen werden oder dezentral z.B. in die Inspektionseinheiten integriert sein.

Der Einlauf 6 des Leerflascheninspektors 9 entspricht hier einer ersten Inspektionseinheit und umfasst hier Seitenwandinspektionsmodule zur Durchführung einer Seitenwandinspektion einer den Einlauf 6 des Leerflascheninspektors 9 durchlaufenen Flasche oder des Behälters. In der hier dargestellten Form ist hier zunächst auch eine Bildaufnahmeeinheit 3 sowie nachfolgend eine Beleuchtungseinheit 2 vorgesehen, wobei sich jeweils eine Bildaufnahmeeinheit 3 und eine Beleuchtungseinheit 2 gegenüber stehen bzw. eine den Einlauf 6 durchlaufende Flasche genau zwischen Beleuchtungseinheit 2 und Bildaufnahmeeinheit 3 läuft. In der hier dargestellten Ausführungsform sind die Anordnung eines Beleuchtungsaufnahmegeräts 3 und einer Beleuchtungseinheit 2 zweimal hintereinander zueinander komplementär ausgeführt. Anhand der ermittelten tatsächlichen Position des Merkmals wird im Einlauf 6 des Leerflascheninspektors 9 eine Maske generiert, so dass bei Durchführung der ersten Inspektion zur Fehler- oder Schmutzerkennung im Bereich der Maske keine Fehlererkennung erfolgt. Das bedeutet, dass das Merkmal selbst von einer Fehlererkennung ausgenommen wird, so dass vermieden wird, dass das gewollte Merkmal auf der Oberfläche der Leerflasche bspw. als Verschmutzung wahrgenommen wird.

Mittels der Steuer- und Rechnereinheit werden die Daten über die die von dem Dreh- und Transportvorgang des Behälters abhängige flächige und/oder räumliche Ausdehnung des einen oder der mehreren Merkmale zur dynamischen Anpassung der Lage sowie der flächigen und/oder räumlichen Ausdehnung der jeweiligen Masken verwendet. Mittels der Steuer- und Rechnereinheit wird nachfolgend sichergestellt, dass immer nur ein möglichst keiner Bereich von der Inspektion ausgenommen wird.

Die Maske wird dabei idealerweise so dimensioniert, dass diese die Markierung nur um eine Fläche überragt, die der Auflösung der Sensoren, insb. der Kameras entspricht.

Nach Durchführung der ersten Inspektion der Leerflasche wird die Leerflasche durch einen Gurtantrieb 8 des Leerflascheninspektors 9 um einen vorgegebenen Winkel gedreht. Dabei handelt es sich in der Regel um einen Winkel von 90°. Nach Durchführung der Drehung gelangt die Flasche 5 in einen Auslauf 7 des Leerflascheninspektors 9. Der Auslauf 7 ist entsprechend zum Einlauf 6 ausgestaltet nur spiegelverkehrt zu diesem ausgeführt und entspricht hier einer zweiten Inspektionseinheit. Auch hier durchläuft die Flasche mindestens einmal, in der Regel zweimal, eine Kombination von Beleuchtungseinheit 2 und Bildaufnahmeeinheit 3. Wobei auch hier die Anordnung von Beleuchtungseinheiten 2 und Bildgebungseinheiten 3 punktsymmetrisch zu einem auf dem Laufband angeordneten zentralen Mittelpunkt ist. Die tatsächlich ermittelte Position des Merkmals wird mit dem durch die Drehung erzeugten Offset verrechnet und als neue Position und Ausdehnung des Merkmals an die Seitenwandinspektion im Auslauf 7 des Leerflascheninspektors 9 als Eingabewert übermittelt. Die Seitenwandinspektionen im Auslauf 7 ermitteln so für die Flasche die Position des Merkmals und verfahren so wie die Seitenwandinspektionsmodule im Einlauf 6 bzgl. Maskierung und Anpassung der Fehlererkennung.

Als fehlerhaft erkannte Behälter werden in bekannter Art und Weise stromabwärts ausgeschleust.

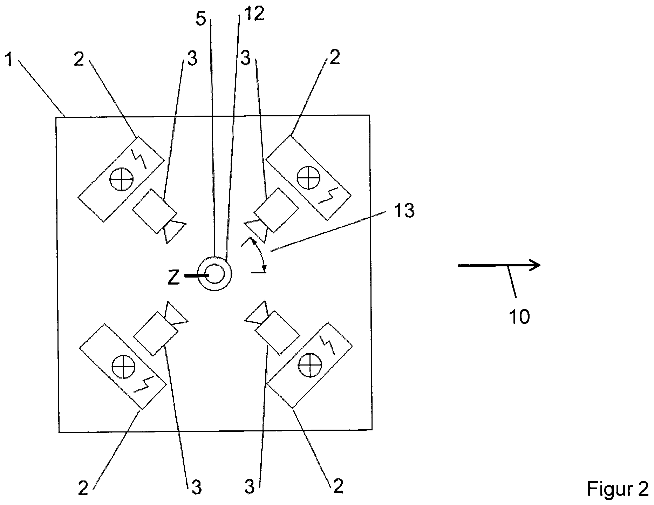

Figur 2 zeigt eine Draufsicht auf ein Erkennungsmodul 1, wie es in der Ausführungsform von Figur 1 vorgesehen ist. Dargestellt sind vier Bildaufnahmeeinheiten 3 und vier den Bildaufnahmeeinheiten 3 zugeordnete Beleuchtungseinheiten 2. Bezüglich eines Mittelpunkts Z befinden sich die Beleuchtungseinheiten 2 jeweilig hinter den Bildaufnahmeeinheiten 3 und liegen mit den ihnen zugeordneten Bildaufnahmeeinheiten 3 auf einer Linie, wobei sich die daraus ergebenden vier Linien genau in dem Mittelpunkt Z schneiden. Wird nun eine Flasche 5 genau auf diesem Mittelpunkt Z lokalisiert, so ist eine Abtastung der Flasche 5 durch die Beleuchtungs- und Bildaufnahmeeinheiten am besten möglich. Im hier dargestellten Fall sind die Beleuchtungseinheiten 2 und die ihnen zugeordneten Bildaufnahmeeinheiten 3 jeweilig zueinander um einen Winkel von 90° angeordnet. Dadurch kann eine 360°-Abtastung eines vorgegebenen Bereichs auf einer Oberfläche einer das Erkennungsmodul durchlaufenen Leerflasche 5 optimal realisiert werden. Zudem sind die Beleuchtungseinheiten 2 sowie die Bildaufnahmeeinheiten 3 in Bezug auf eine Durchlaufrichtung 10 in einem Winkel 13 von etwa 45° angeordnet. Die Beleuchtungen bzw. Beleuchtungseinheiten 2 können je nach Typ des zu erkennenden Merkmals auf der Oberfläche einer das Erkennungsmodul durchlaufenen Leerflasche ausgewählt werden. Ebenso kann auch die Position der Beleuchtungseinheiten 2 entsprechend dem Typ des Merkmals auf der Oberfläche einer das Erkennungsmodul durchlaufenen Flasche ausgewählt werden.

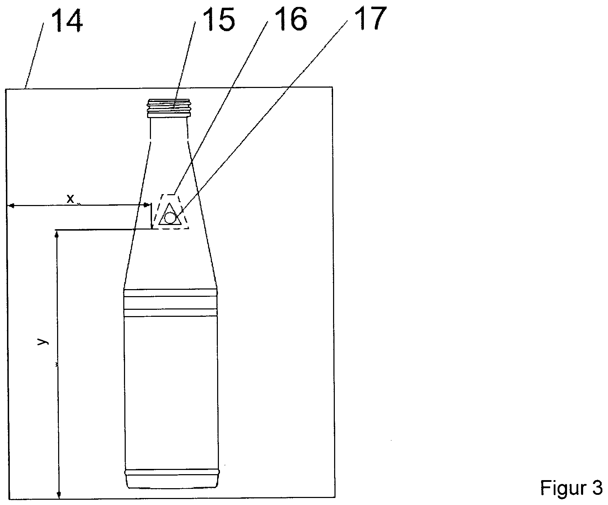

Figur 3 zeigt eine Beispielaufnahme einer Flasche mit einer in Bezug auf ein Merkmal richtig positionierten Maske. Die Aufnahme 14 zeigt eine Flasche 15 mit einem Objekt bzw. Merkmal 17 und einer generierten Maske 16 zur Durchführung einer Inspektion. Das Objekt 17 bzw. das Merkmal 17 ist das Merkmal auf der Oberfläche der Flasche 15, welches erkannt werden soll und mit einer Maske 16 im Vorfeld einer Inspektion versehen werden soll, um zu vermeiden, dass das Merkmal 17 bei Inspektionen als Fehler interpretiert wird.

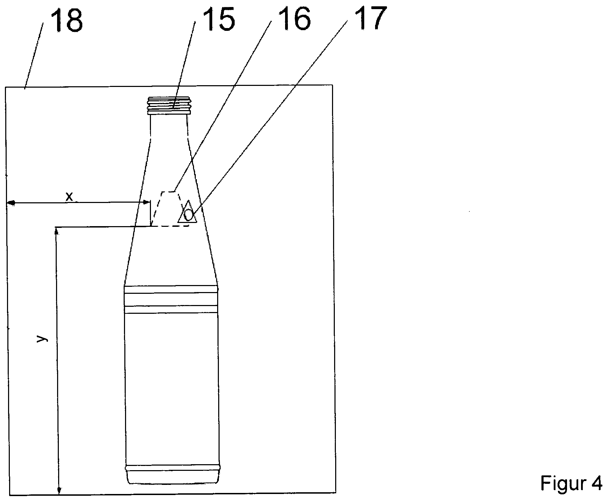

Figur 4 zeigt im Gegenzug dazu eine Beispielaufnahme 18 einer Flasche 15 mit einem Merkmal 17, wobei hier die Maske 16, welche im Vorfeld einer Inspektion auf das Merkmal 17 abzubilden ist, nicht richtig positioniert ist, was durch eine fehlerhafte Drehung der Flasche vor Durchführung einer zweiten Inspektion erfolgt sein kann. Die Position des Merkmals 17 wird sowohl in Figur 3 wie in Figur 4 durch Koordinaten x und y angegeben. Dabei gibt y die Höheneinstellung an und x beschreibt eine Winkelstellung des Merkmals 17 auf einem entsprechenden Umfang der Flasche 15.

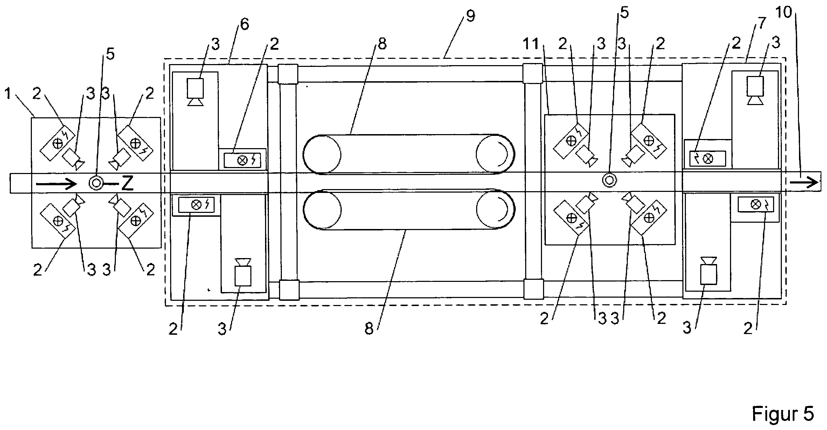

Figur 5 zeigt in schematischer Darstellung eine Draufsicht auf eine zweite Ausführungsform der erfindungsgemäßen Vorrichtung zur Durchführung einer Inspektion mindestens einer Leerflasche. Im Gegensatz zur Ausführungsform von Figur 1 zeigt die hier dargestellte Ausführungsform ein zweites Erkennungsmodul 11, welches einer zweiten Inspektion im Auslauf 7 des Leerflascheninspektors 9 vorgeschaltet ist. Das bedeutet, dass eine Flasche 5, welche in Durchlaufrichtung 10 die Ausführungsform der erfindungsgemäßen Vorrichtung durchläuft, zunächst ein erstes Erkennungsmodul 1, dann einen Einlauf 6 des Leerflascheninspektors 9, dann einen Gurtantrieb 8, sodann ein zweites Erkennungsmodul 11 und zuletzt einen Auslauf 7 des Leerflascheninspektors 9 durchläuft. Das zweite Erkennungsmodul 11 ist analog zu dem ersten Erkennungsmodul 1 aufgebaut und bewirkt, dass nach Durchlauf einer Leerflasche 5 durch den Gurtantrieb 8 und entsprechender Drehung der Leerflasche 5 durch den Gurtantrieb 8 die Position des Merkmals nicht einfach mit der durchgeführten Drehung verrechnet bzw. ein entsprechender Offset mit einbezogen wird und daraus für die zweite Inspektion im Auslauf 7 eine neue Position bestimmt wird, sondern vielmehr die neue Position des Merkmals vor Durchlauf der zweiten Inspektion im Auslauf 7 neu bestimmt wird. Die Bestimmung der neuen Position des Merkmals erfolgt analog zur Bestimmung der tatsächlichen Position des Merkmals im ersten Erkennungsmodul. Die daraus ermittelte Winkelposition und Höhenposition des Merkmals wird an die nachfolgenden Seitenwandinspektionen im Auslauf 7 des Leerflascheninspektors 9 übermittelt. Diese Inspektionssysteme setzen für die ermittelte neue Position des Merkmals eine Maske, d. h. eine zweite Maske im betreffenden Inspektionsbereich der jeweiligen Seiteninspektion, so dass im Bereich der zweiten Maske ebenfalls, wie zuvor im Bereich der ersten Maske bei Durchlauf der ersten Inspektion, keine Fehlererkennung auf Verschmutzung durchgeführt wird. Sollte die Drehung der Flasche durch den Gurtbandantrieb 8 nicht genau genug erfolgt sein, so wird das Merkmal durch das zweite Erkennungsmodul 11 trotzdem an der richtigen Position maskiert.

Das Prinzip der Ermittlung der Ausdehnung des Merkmals auf dem Behälter oder der Flasche, die Datenweiterleitung und die davon abhängige dynamische Anpassung der Lage sowie der flächige oder räumlichen Ausdehnung einer oder mehrerer Masken, ist für alle beschriebenen Ausführungsfälle gleich.

Je nach Inspektionsaufgabe kann es natürlich sinnvoll und hinreichend sein, dass nur eine Inspektionseinrichtung, bzw. ein Inspektionsschritt mit vorgenannter dynamischer Maskierung vorgenommen wird.

## Patentansprüche

1. Verfahren zur Fehlerinspektion mindestens eines Leerbehälters (15), insbesondere Flaschen aus Glas, PET oder einem anderen transparenten Material, unter Erkennung einer Position mindestens eines auf einer Oberfläche der Leerbehälter angeordneten Merkmals (17), wie beispielsweise ein Embossing, eine Ziernaht oder dergleichen, bei dem die Leerbehälter (15) vor der Fehlerinspektion, mittels mindestens einem Inspektionsmodul, ein Erkennungsmodul (1) durchläuft, in welchem eine vorgegebene Position des zu erkennenden Merkmals (17) optisch und/oder sensorisch zur Erkennung einer tatsächlichen Position des Merkmals (17) abgetastet und die tatsächliche Position ermittelt wird, bei einer nachfolgenden ersten Inspektion, an der mindestens einen Inspektionseinheit, für die ermittelte Position des Merkmals (17) eine erste Maske generiert wird, so dass bei Durchführen der ersten Inspektion im Bereich der ersten Maske keine Fehlererkennung erfolgt, nach Durchführung der ersten Inspektion der Leerbehälter (15) um einen vorgegebenen Winkel gedreht wird, eine zweiten Inspektion erfolgt, wobei bei der weiteren Inspektion für die bereitgestellte neue Position des Merkmals (17) eine weitere Maske generiert wird, so dass bei Durchführen der zweiten Inspektion im Bereich der zweiten Maske keine Fehlererkennung erfolgt, wobei bei einer ungenauen Drehung der Leerbehälter (15) das Merkmal nicht im Bereich der zweiten Maske ist und als Fehler erkannt wird, wobei die Position des Merkmals (17) und dessen flächige Ausdehnung mit dem durch die Drehung erzeugten Offset verrechnet wird und als neue Position und Ausdehnung der jeweiligen Masken dient.

2. Verfahren nach Anspruch 1, bei dem der vorgegebene Winkel als Winkel von 90° gewählt wird.

3. Verfahren nach Anspruch 1 oder 2, bei dem die vorgegebene Position des zu erkennenden Merkmals (17) optisch und/oder sensorisch mit einer 360°-Abdeckung zur Erkennung der tatsächlichen Position des Merkmals (17) abgetastet wird.

4. Verfahren nach Anspruch 1, 2 oder 3, bei dem die erste Inspektion eine Seitenwandinspektion in einem Einlauf (6) eines Leerbehälterinspektors (9) darstellt.

5. Verfahren nach einem der voranstehenden Ansprüche, bei dem die zweite Inspektion eine Seitenwandinspektion in einem Auslauf (7) eines Leerbehälterinspektors (9) darstellt.

6. Verfahren nach einem der voranstehenden Ansprüche, bei dem die Drehung des Leerbehälters (15) bei Durchlauf des Leerbehälters (15) durch einen Gurtbandantrieb (8) eines Leerbehälterinspektors (9) vorgenommen wird.

7. Verfahren nach einem der voranstehenden Ansprüche, bei dem nach Drehung des Leerbehälters (15) um einen vorgegebenen Winkel der Behälter (15) vor der zweiten Inspektion ein zweites Erkennungsmodul (11) durchläuft, in welchem die neue Position des zu erkennenden Merkmals optisch und/oder sensorisch zur Erkennung der tatsächlichen neuen Position des Merkmals abgetastet und die tatsächliche neue Position ermittelt wird, bei der nachfolgenden zweiten Inspektion für die ermittelte tatsächliche neue Position des Merkmals (17) die zweite Maske generiert wird, so dass bei Durchführen der zweiten Inspektion im Bereich der zweiten Maske keine Fehlererkennung erfolgt.

8. Verfahren nach Anspruch 7, bei dem die ermittelte tatsächliche Position vor der ersten Inspektion und die ermittelte tatsächliche neue Position vor der zweiten Inspektion miteinander verrechnet werden und daraus ein tatsächlicher Drehwinkel bestimmt wird.

9. Verfahren nach Anspruch 8, bei dem der bestimmte tatsächliche Drehwinkel zu einer Drehwinkelüberwachung verwendet und mit dem vorgegebenen Winkel und dessen Toleranzen verglichen wird, wobei eine Abweichung außerhalb der Toleranzen als Fehler erkannt wird.

10. Verfahren nach einem der voranstehenden Ansprüche, bei dem eine Position durch Angabe einer Winkelposition und einer Höhenposition angegeben wird.

11. Verfahren nach einem der voranstehenden Ansprüche, bei dem in dem Erkennungsmodul (1, 11) verschiedene Beleuchtungseinheiten (2) vorgesehen werden, die je nach Typ des zu erkennenden Merkmals (17) ausgewählt werden.

12. Vorrichtung zur Fehlerinspektion mindestens eines Leerbehälters unter Erkennung einer Position mindestens eines auf einer Oberfläche des Leerbehälters angeordneten Merkmals, wobei die Vorrichtung umfasst: mindestens ein erstes Erkennungsmodul (1), das dazu ausgelegt ist, wenn der Leerbehälter das Erkennungsmodul (1) durchläuft, eine vorgegebene Position des zu erkennenden Merkmals optisch und/oder sensorisch zur Erkennung einer tatsächlichen Position des Merkmals abzutasten, die tatsächliche Position zu ermitteln und als Datensatz bereitzustellen, mindestens eine erste Inspektionseinheit (6), die dazu ausgelegt ist, vor Durchführung einer Inspektion des Leerbehälters für eine bereitgestellte Position des Merkmals eine Maske zu generieren, so dass bei Durchführen einer Inspektion im Bereich der Maske keine Fehlererkennung erfolgt, mindestens ein Drehmodul (8), das dazu ausgelegt ist, nach Durchführung einer ersten Inspektion den Leerbehälter um einen vorgegebenen Winkel zu drehen, wobei die Position des Merkmals mit dem durch die Drehung erzeugten Offset zu verrechnen und als neue Position zur Durchführung einer zweiten Inspektion bereitzustellen ist, wobei mindestens eine Steuereinheit vorgesehen ist, zur Weiterleitung der bewegungsabhängigen Merkmalsposition und Merkmalsdimension relativ zur Inspektionseinheit (6), zum Setzen einer zweiten Maske für die neue Position des Merkmals und zur entsprechenden dynamischen Anpassung der Masken im Inspektionsbereich, wobei das Drehmodul (8) und die erste Inspektionseinheit (6) in einen Leerbehälterinspektor (9) integriert sind.

13. Vorrichtung nach Anspruch 12, die eine zweite Inspektionseinheit (7) umfasst, wobei das erste Erkennungsmodul (1), die erste Inspektionseinheit (6), das Drehmodul (8) und die zweite Inspektionseinheit (7) in Reihe hintereinander angeordnet sind, so dass die erste Inspektion in der ersten Inspektionseinheit (6) und die zweite Inspektion in der zweiten Inspektionseinheit (7) durchzuführen sind.

14. Vorrichtung nach Anspruch 13, die ein zweites Erkennungsmodul (11) aufweist, das zwischen Drehmodul (8) und zweiter Inspektionseinheit (7) angeordnet ist.

## Claims

1. Method for the fault inspection of at least one empty container (15), in particular bottles made of glass, PET, or another transparent material, by detecting a position of at least one feature (17) arranged on a surface of the empty container, such as, for example, an embossing, a decorative seam, or the like, wherein, before the fault inspection by means of at least one inspection module, the empty container (15) runs through a detection module (1), in which a predefined position of the feature (17) to be detected is scanned optically and/or by sensors in order to detect an actual position of the feature (17), and the actual position is determined; during a subsequent first inspection, at the at least one inspection unit, a first mask is generated for the determined position of the feature (17), such that, when performing the first inspection no misdetection occurs in the area of the first mask; after the first inspection has been performed the empty container (15) is rotated by a predefined angle, a second inspection is carried out, wherein, during the further inspection for new position provided of the feature (17), a further mask is generated, such that, during the performance of the second inspection, no misdetection occurs in the area of the second mask, wherein, in the event of an imprecise rotation of the empty containers (15), the feature is not in the area of the second mask and is identified as a fault, wherein the position of the feature (17) and its surface extension is calculated with the offset produced by the rotation and serves as the new position and extension of the respective masks.

2. Method according to claim 1, wherein the predefined angle is selected as an angle of 90°.

3. Method according to claim 1 or 2, wherein the predefined position of the feature (17) to be detected is scanned optically and/or by sensors with a 360° coverage in order to detect the actual position of the feature (17).

4. Method according to claim 1, 2 or 3, wherein the first inspection represents a side wall inspection in an inlet (6) of an empty container inspector (9).

5. Method according to any one of the preceding claims, wherein the second inspection represents a side wall inspection in an outlet (7) of an empty container inspector (9).

6. Method according to any one of the preceding claims, wherein the rotation of the empty container (15) is carried out during the run through of the empty container (15) by means of a belt drive (8) of an empty container inspector (9).

7. Method according to any one of the preceding claims, wherein, after the rotation of the empty container (15) by a predefined angle, the container (15) runs through a second detection module (11) before the second inspection, in which the new position of the feature which is to be detected is scanned optically and/or by sensors in order to detect the actual new position of the feature and the actual new position is detected; during the following second inspection for the actual detected new position of the feature (17) the second mask is generated, such that, when the second inspection is carried out, no misdetection occurs in the area of the second mask.

8. Method according to claim 7, wherein the detected actual position before the first inspection and the determined actual new position before the second inspection are offset against one another, and an actual angle of rotation is determined.

9. Method according to claim 8, wherein the detected actual angle of rotation is used for angle of rotation monitoring, and is compared with the predefined angle and its tolerances, wherein a deviation outside the tolerances is detected as a fault.

10. Method according to any one of the preceding claims, wherein a position is determined by the provision of an angle position and of a height position.

11. Method according to any one of the preceding claims, wherein different lighting units (2) are provided in the detection module (1, 11), which are selected depending on the type of the feature (17) which is to be detected.

12. Device for fault inspection of at least one empty container, with the detection of a position of at least one feature arranged on a surface of the empty container, wherein the device comprises: At least one detection module (1), which is configured such that, when the empty container runs through the detection module (1), a predefined position of the feature which is to be detected is scanned optically and/or by sensors in order to detect an actual position of the feature, the actual position is detected, and provided as a data set; at least one first inspection unit (6), which is configured such that, before carrying out an inspection of the empty container, a mask is generated for a position provided of the feature, such that, when an inspection is carried out, no misdetection occurs in the area of the mask; at least one rotation module (8), which is configured such that, after a first inspection has been carried out, the empty container is rotated by a predefined angle, wherein the position of the feature is calculated with the offset produced by the rotation and then provided as a new position for carrying out a second inspection, wherein at least one control unit is provided for forwarding the movement-dependent feature position and feature dimension relative to the inspection unit (6), for setting a second mask for the new position of the feature and for the corresponding dynamic adaptation of the masks in the inspection area, and wherein the rotation module (8) and the first inspection unit (6) are integrated into an empty container inspector (9).

13. Device according to claim 12, which comprises a second inspection unit (7), wherein the first detection module (1), the first inspection unit (6), the rotation module (8), and the second inspection unit (7) are arranged in a row one behind another, such that the first inspection are to be carried out in the first inspection unit (6) and the second inspection is to be carried out in the second inspection unit (7).

14. Device according to claim 13, which comprises a second detection module (11), which is arranged between the rotation module (8) and the second inspection unit (7).

## Revendications

1. Procédé d'inspection de défauts d'au moins un contenant vide (15), en particulier de bouteilles en verre, en PET ou en un autre matériau transparent, en identifiant une position d'au moins une caractéristique (17) disposée sur une surface des contenants vides, telle qu'un estampage, un cordon de soudure décoratif ou similaire, où les contenants vides (15) traversent, avant l'inspection de défauts, au moyen d'au moins un module d'inspection, un module d'identification (1), dans lequel une position prédéfinie de la caractéristique (17) à identifier est balayée de manière optique et/ou par capteur pour identifier une position réelle de la caractéristique (17) et la position réelle est déterminée, un premier masque est généré pour la position déterminée de la caractéristique (17) lors d'une première inspection qui suit sur l'au moins une unité d'inspection de sorte qu'aucune identification de défaut n'a lieu lors de la mise en œuvre de la première inspection dans la zone du premier masque, le contenant vide (15) est tourné d'un angle prédéfini après la mise en œuvre de la première inspection, une deuxième inspection a lieu, dans lequel un autre masque est généré pour la nouvelle position fournie de la caractéristique (17) lors de l'autre inspection de sorte qu'aucune identification de défaut n'a lieu lors de la mise en œuvre de la deuxième inspection dans la zone du deuxième masque, dans lequel, lors d'une rotation imprécise des contenants vides (15), la caractéristique n'est pas dans la zone du deuxième masque et est identifiée en tant que défaut, dans lequel la position de la caractéristique (17) et son extension à plat sont calculées avec le décalage généré par la rotation et font office de nouvelle position et d'extension des masques respectifs.

2. Procédé selon la revendication 1, où l'angle prédéfini est choisi en tant qu'angle de 90°.

3. Procédé selon la revendication 1 ou 2, où la position prédéfinie de la caractéristique (17) à identifier est balayée de manière optique et/ou par capteur avec une couverture de 360° pour identifier la position réelle de la caractéristique (17).

4. Procédé selon la revendication 1, 2 ou 3, où la première inspection constitue une inspection de paroi latérale dans une entrée (6) d'un inspecteur de contenant vide (9).

5. Procédé selon l'une quelconque des revendications précédentes, où la deuxième inspection constitue une inspection de paroi latérale dans une sortie (7) d'un inspecteur de contenant vide (9).

6. Procédé selon l'une quelconque des revendications précédentes, où la rotation du contenant vide (15) est réalisée lors du passage du contenant vide (15) à travers un entraînement de sangle (8) d'un inspecteur de contenant vide (9).

7. Procédé selon l'une quelconque des revendications précédentes, où après la rotation du contenant vide (15) d'un angle prédéfini, le contenant (15) traverse avant la deuxième inspection un deuxième module d'identification (11), dans lequel la nouvelle position de la caractéristique à identifier est balayée de manière optique et/ou par capteur pour identifier la nouvelle position réelle de la caractéristique et la nouvelle position réelle est déterminée, le deuxième masque est généré pour la nouvelle position réelle déterminée de la caractéristique (17) lors de la deuxième inspection qui suit de sorte qu'aucune identification de défaut n'a lieu lors de la mise en œuvre de la deuxième inspection dans la zone du deuxième masque.

8. Procédé selon la revendication 7, où la position réelle déterminée avant la première inspection et la nouvelle position réelle déterminée avant la deuxième inspection sont calculées l'une avec l'autre et un angle de rotation réel est défini sur cette base.

9. Procédé selon la revendication 8, où l'angle de rotation réel défini est utilisé en vue d'une surveillance d'angle de rotation et est comparé à l'angle prédéfini et à ses tolérances, dans lequel un écart en dehors des tolérances est identifié en tant que défaut.

10. Procédé selon l'une quelconque des revendications précédentes, où une position est indiquée par l'indication d'une position angulaire et d'une position en hauteur.

11. Procédé selon l'une quelconque des revendications précédentes, où sont prévues dans le module d'identification (1, 11) différentes unités d'éclairage (2) qui sont choisies respectivement selon le type de la caractéristique (17) à identifier.

12. Dispositif d'inspection de défauts d'au moins un contenant vide en identifiant une position d'au moins une caractéristique disposée sur une surface du contenant vide, dans lequel le dispositif comprend : au moins un premier module d'identification (1) qui est configuré pour, quand le contenant vide traverse le module d'identification (1), balayer de manière optique et/ou par capteur une position prédéfinie de la caractéristique à identifier pour identifier une position réelle de la caractéristique, pour déterminer la position réelle et la fournir en tant que jeu de données, au moins une première unité d'inspection (6) qui est configurée pour générer un masque pour une position fournie de la caractéristique avant la mise en œuvre d'une inspection du contenant vide de sorte qu'aucune identification de défaut n'a lieu lors de la mise en œuvre d'une inspection dans la zone du masque, au moins un module de rotation (8) qui est configuré pour tourner le contenant vide d'un angle prédéfini après la mise en œuvre d'une première inspection, dans lequel la position de la caractéristique est à calculer avec le décalage généré par la rotation et est à fournir en tant que nouvelle position pour mettre en œuvre une deuxième inspection, dans lequel au moins une unité de commande est prévue pour transférer la position de caractéristique dépendant du déplacement et la dimension de caractéristique par rapport à l'unité d'inspection (6) pour poser un deuxième masque pour la nouvelle position de la caractéristique et pour, en conséquence, adapter de manière dynamique les masques dans la zone d'inspection, dans lequel le module de rotation (8) et la première unité d'inspection (6) sont intégrés dans un inspecteur de contenant vide (9).

13. Dispositif selon la revendication 12, qui comprend une deuxième unité d'inspection (7), dans lequel le premier module d'identification (1), la première unité d'inspection (6), le module de rotation (8) et la deuxième unité d'inspection (7) sont disposés les uns après les autres de manière alignée de sorte que la première inspection dans la première unité d'inspection (6) et la deuxième inspection dans la deuxième unité d'inspection (7) sont à mettre en œuvre.

14. Dispositif selon la revendication 13, qui présente un deuxième module d'identification (11) qui est disposé entre le module de rotation (8) et la deuxième unité d'inspection (7).
